# EUROPEAN PATENT APPLICATION

(11) **EP 1 032 207 A1**
(43) Date of publication of application: **30.08.2000**
(21) Application number: 00400456.0
(22) Date of filing: 18.02.2000
(51) Int. Cl.: H04N 7/16

(54) **Device for monitoring or managing a television receiver**

(30) Priority: 26.02.1999 FR 9902453
(71) Applicant: THOMSON multimedia, 92100 Boulogne Billancourt (FR)
(72) Inventor: Patry, Nadine, 92100 Boulogne-Billancourt (FR)
(74) Representative: Kohrs, Martin

(57) **Abstract**

The invention relates to a device for monitoring or managing a television receiver. This device receive television transmissions comprising an information item relating to the transmission screened on the receiver (12). The device comprise a memory (20) for storing this information item.

This device is characterized in that it comprises it comprises a detector for extracting the said information item from the television signals transmitted and a change of transmissions detector which detects a change in value of the said information item on the said channel and actuates the writing to memory of at least the said information item.

The device comprises, preferably, means for recording an information item representing the duration of screening of each transmission, for example the start time and the end time of the screening of a transmission.

## Description

The invention relates to a device for monitoring or managing a television receiver.

Since a television receiver is ordinarily used as a leisure apparatus, it has not hitherto been considered necessary to furnish it with management tools. There are however devices which allow very simple operations. These are in particular, pay-television decoders, of analogue or digital type which, usually, permit the receiving of programmes only if a user-specific code is introduced into the decoder. There are also decoders making it possible to prevent unauthorized persons, for example children, from being able to access chosen programmes.

The invention results from the observation that the known management devices do not entirely meet the requirements of the users of television receivers.

It is characterized in that the device comprises a means slaved to the change of station or of service control of the receiver so as to extract from the television signals transmitted an information item relating to the television transmissions screened on the receiver, and a memory for storing this information item.

Storage enables the user to ascertain the transmissions which have been screened. The device is particularly simple since the information item can be extracted directly from the television signals transmitted.

Preferably, the memory stores the time and/or the duration of screening.

The data relating to the programmes (transmissions) are commonly transmitted at the same time as the programmes themselves, for example by the «teletext» system or in the digital television systems. Thus, in the DVB-SI system, information tables relating to the events in progress and, optionally, to the subsequent events are provided.

Preferably, storage is performed automatically, for example each time the television is switched on for a television transmission or during a change of station (or of service) or of programme.

The automatic triggering of the placing in memory may be controlled by detecting a change of programme in the service path, the signals in this path containing an identification of the station transmitted or of the service transmitted.

This automatic storage can in particular serve for «parental control», that is to say parents may automatically ascertain the transmission watched by their children together with, as necessary, the duration for which the transmission has been received.

In one embodiment, the recording of data relating to a programme is retained in memory only if the television has remained tuned to this transmission for a minimum period, for example of the order of 5 or 10 minutes. If the duration is less than this minimum, the recording is erased from the memory. The minimum or threshold can be adjusted by the user.

The storing of the transmissions received can advantageously be screened on the receiver.

In one embodiment, a control is provided, for example triggered by a button of a remote control, which causes a menu to be screened on the receiver, this menu allowing the activation or deactivation of the storage function and/or the selecting of the events to be stored and/or their consultation and/or erasure.

In a simplified embodiment, the memory records an indication representing the station to which the television has been tuned and the start and end times or the duration of reception of the transmissions.

The present invention provides a device for monitoring television transmissions comprising a means slaved to the change of station or service control of a television receiver so as to extract from the television signals transmitted an information item relating to the transmission screened on the receiver, and memory means for storing this information item.

According to one embodiment, the device comprises means for recording an information item representing the duration of screening of each transmission.

According to one embodiment, the device comprises means for recording the start time and the end time of the screening of a transmission.

According to one embodiment, the television transmissions being of digital type, the information items stored in the memory are extracted from the events table transmitted in the service path of the television signal.

According to one embodiment, the information items stored in the memory are extracted from teletext data or the like.

According to one embodiment, the device comprises a means for limiting the storage in the memory to the transmissions screened for a duration greater than a specified threshold, preferably one which can vary.

According to one embodiment, the device comprises a means for controlling the placing in memory of the information items relating to the transmissions screened as a function of the receiver switch-on signal and/or of a change of station signal.

According to one embodiment, the control for placing in memory the information items relating to the transmissions screened is performed as a function of a change of station indicative signal supplied by the service path of a digital signal.

According to one embodiment, the device comprises a means for allowing the screening on the television receiver screen of the data stored in the memory.

According to one embodiment, the device comprises a processing unit intended for supplying statistical data regarding the transmissions screened and stored in the memory.

Other characteristics and advantages of the invention will become apparent with the description of certain of its embodiments, this description being given whilst referring to the appended drawings in which:
Figure 1 is a diagram of a device for receiving television transmissions, and
Figure 2 is a diagram of a device in accordance with the invention.

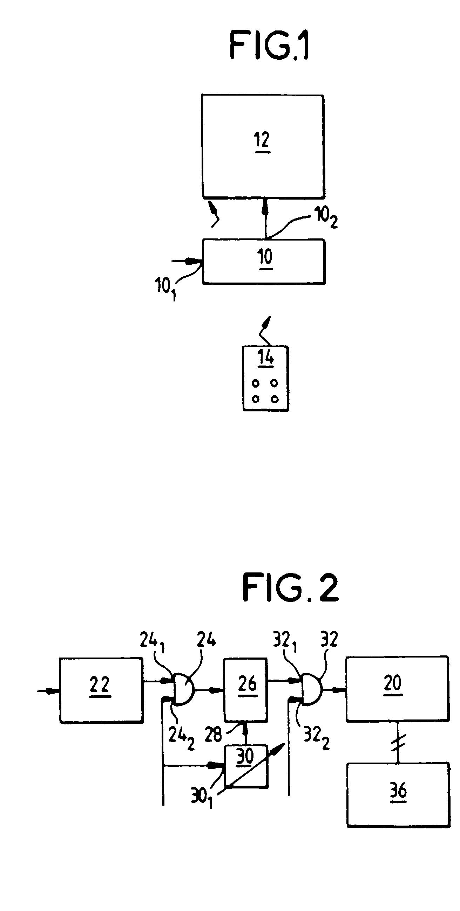

The exemplary embodiment of the invention which will be described in conjunction with the figures relates mainly to a device for receiving digital television transmissions. This system comprises a decoder 10 (Figure 1) which comprises an input 10₁ for receiving digital signals and an output 10₂, usually analogue, for connection thereof to a television receiver 12. The controls of the receiver 12 are achieved with the aid of a remote control device 14. These various elements being well known, it is not necessary to describe them in detail. However, it is recalled that, in digital television programmes, the digital signals are transmitted in the form of packets, and the packets are separated so as each to represent a type of information item or a «path». Thus, the digital television signals comprise a video path, an audio path and a service path.

In the service path, there is provided a table called the «events information table» in the DVB-SI standard and this table contains information items regarding the programmes currently being transmitted in each channel. The standard also makes provision, as an option, for the transmission in this table, of information items relating to subsequent events, that is to say transmissions which will be broadcast after the current transmission.

Each events table comprises the following indications:
- the name of the event,
- the time of the start of the event,
- the duration of the event,
- the topic of the event (film, information, sport, etc.),
- a short summary,
- a long summary, and
- a parental level, that is to say an indication regarding the relevant audience, that is to say whether or not the event is recommended for children.

Hitherto, these events tables have commonly been used in order for the user to view in real time the information from the table. Stated otherwise, the events table, such as the «teletext» system, makes it possible to ascertain the characteristics of the transmission or of the transmissions in progress and, possibly, the characteristics of future transmissions.

The invention also takes advantage of the events table, but with the aim of monitoring or managing the use of the receiver.

The device according to the invention comprises a memory 20 intended for recording the information items originating from a device 22 for detecting the events table of the television station to which the television (switched on) is tuned.

The information items supplied by the device 22 are thus transferred to the memory 20 only if two conditions are satisfied, namely, on the one hand, that the television is switched on, and, on the other hand, that this television is tuned to the corresponding channel. Thus, in the example, provision is made for the output of the detection device 22 to be connected to a first input 24₁ of an AND gate 24 whose second input 24₂ receives an authorization signal when the two conditions mentioned above are satisfied.

Moreover, the memory 20 will not retain the data from the events table unless the relevant programme has been screened for a minimum duration T₁. In the example, this duration is adjustable. A buffer memory 26 is therefore provided, which receives the output signal from the AND gate 24, which records the events table in progress and this buffer memory 26 comprises a reset input 28 which is linked to the output of a timing device 30 which transmits a reset signal, that is to say an erasure signal, when the receiver is switched off or is tuned to another channel before the expiry of the duration T₁ following the start of the reception of the transmission. Stated otherwise, the events pertaining to the transmissions which will be received for a period of less than T₁, for example of the order of a few minutes, will not be transferred to the memory 20.

The timing device 30 comprises an input 30₁ receiving a signal similar to that applied to the second input 24₂ of the gate 24. The device 30 thus supplies a signal for resetting the memory 26 when the signal on its input 30₁ changes state before the expiry of the duration T₁.

The content of the buffer memory 26 is transferred into the memory 20 at the end of the event or when the receiver is either switched off, or tuned to another programme. Hence, between the buffer memory 26 and the memory 20 is provided an AND gate 32 whose first input 32₁ is linked to the output of the memory 26 and whose second input 32₂ receives a signal indicative either of the end of the reception of a transmission, or of the switching off of the receiver, or of a change of station.

In the case of a digital television signal, the change of station signal used on the input 24₂ of the AND gate 24 and/or on the input 30₁ of the device 30 is supplied either by the actual control of the television, or, indirectly, by the service path in which the change of station can be detected in the data bundle.

When the data of the buffer memory 26 are transferred to the memory 20, at the conclusion of the duration T₁ and at the end of the reception of the transmission, this memory 20 records, furthermore, the end of reception time and/or the duration of reception of the transmission.

Although the embodiment described in conjunction with Figure 2 is in circuit form, it goes without saying that the various functions described may be achieved in full in software form.

It is possible, as described above, for all the information items of the events table to be kept in the memory 20. However, to minimize the size of this memory, it is preferable to provide a means (not shown) making it possible to select information items which will be saved in the memory 20. It will be possible, for example, to keep in memory just the name of the event, its start time, its duration and the authorization level or parental level. Anyhow, it is preferable for the choice of the information items to be saved to be left to the user with the aid of a program installed in the device and which can be selected, conventionally, with the aid of the remote control 14 and of a menu displayed on the screen of the receiver 12.

The menu available to the user can also offer him the possibility, which can be activated or deactivated at will, of supplying a signal, especially an indication on the screen of the television receiver, each time an event is saved in the memory 20.

The information items contained in the memory 20 are supplied to a processing unit 36 which, in a simple version, allows the viewing, on the screen of the receiver 12, of the events recorded in the memory 20. It is thus possible to ascertain when and how the receiver has been used. The processing unit 36 can also perform processing operations on the data contained in the memory with the aid of conventional statistical programs. The statistics may relate for example to the average daily duration of use of the receiver or the duration of use according to the kind of transmission. The statistical data may also relate to the time slot of the transmissions screened, the duration of screening, the topics, whether or not a fee is payable and the parental level. These statistics may refer to all programmes or to selectable duration, such as a year, half-year, quarter, month, fortnight, week, or day.

Moreover, the content of the memory and/or the statistical data supplied by the unit 36 may be transmitted, for example with the aid of telephone lines, to an operator who can use these data for audience studies.

Although the invention has been described in conjunction with the reception of digital television transmissions, it is not limited to this application. It also relates to a storage and/or management device in respect of television transmissions of analogue type. Even if the television signal does not include any service-related information items such as the events tables or the teletext data, it is possible to record the channels screened and the duration and time of screening.

The storage and management device is integrated either into the decoder 10, or into the receiver 12. As a variant, it constitutes a separate accessory plugged into a socket of the receiver 12.

## Claims

1. Device for monitoring digital television transmissions on at least one broadcasting channel, the said transmissions comprising an information item relating to the transmission screened on the receiver (12), and a memory (20) for storing this information item, characterized in that it comprises a detector for extracting the said information item from the television signals transmitted and a change of transmissions detector which detects a change in value of the said information item on the said channel and actuates the writing to memory of at least the said information item.

2. Device according to Claim 1, characterized in that a second information item representing the duration of screening of each transmission is written to the memory.

3. Device according to Claim 2, characterized in that the start time and/or the end time of the screening of each transmission is/are written to the memory.

4. Device according to any one of Claims 1 to 3, characterized in that the information items extracted from the television signals and written to memory comprise one at least of the elements of the following set: (name of the transmission, topic of the transmission, summary of the transmission, parental level of the transmission).

5. Device according to any one of Claims 1 to 4, characterized in that it comprises an indicator having two states of which one activates the writing to memory and a means of display making it possible to display the state of this indicator.

6. Device according to Claim 5, characterized in that the display means comprises a means of selecting an information item transmitted by the signals and in that the writing to memory is activated when the information item relating to the transmission screened on the receiver corresponds to the selected information item.

7. Device according to Claim 5, characterized in that the display means comprises a means of erasing information items written to memory.

8. Device according to Claim 5, characterized in that the display means comprises a means of consulting information items written to memory.
